# EUROPÄISCHE PATENTSCHRIFT

(11) **EP 0 732 715 B1**
(45) Veröffentlichungstag und Bekanntmachung des Hinweises auf die Patenterteilung: **11.08.1999**
(21) Anmeldenummer: 96103967.4
(22) Anmeldetag: 13.03.1996
(51) Int. Cl.: H01H 13/06, F16H 59/70, G05G 5/06

(54) **Rastelement mit integriertem Schalter**
Detent with integrated switch
Arrêt avec interupteur incorporé

(30) Priorität: 17.03.1995 DE 19509878
(43) Veröffentlichungstag der Anmeldung: 18.09.1996
(73) Patentinhaber: Schwarzbich, Jörg, D-33615 Bielefeld (DE)
(72) Erfinder: Schwarzbich, Jörg, D-33615 Bielefeld (DE)
(74) Vertreter: TER MEER STEINMEISTER & PARTNER GbR

(56) Entgegenhaltungen:
- DE-A- 3 818 562
- DE-A- 3 917 659
- DE-U- 6 607 099
- DE-U- 9 400 632

## Beschreibung

Die Erfindung betrifft ein Rastelement für Schaltwellen, mit einem elastisch gegen ein Schaltgebirge der Schaltwelle gespannten Rastglied, einem durch eine Membran von dem Rastglied getrennten Schalter, dessen Betätigungsorgan elastisch in Richtung auf das Rastglied vorgespannt und durch dieses betätigbar ist, und einem zwischen dem Rastglied und der Membran eingefügten, elastisch komprimierbaren Schaltweganpassungsglied, das einen Haltestift und einen Druckstift aufweist, die teleskopartig gegeneinander verschiebbar und durch eine Feder in Trennrichtung vorgespannt sind.

Ein solches Rastelement dient dazu, die Schaltwelle eines Schaltgetriebes in der jeweils gewählten Schaltposition zu fixieren und zugleich mit Hilfe des Schalters ein Signal zu erzeugen, das einen bestimmten Getriebezustand anzeigt. Beispielsweise kann dieser Schalter dazu dienen, bei eingelegtem Rückwärtsgang das Rückfahrlicht einzuschalten.

Dadurch, daß der Schalter unmittelbar in das Rastelement integriert ist, erübrigt sich die Anbringung eines gesonderten Rückfahrlichtschalters, so daß in den verschiedenen Getriebekonstruktionen, in denen das Rastelement verwendet wird, beträchtliche Vereinfachungen und Einsparungen erreicht werden. Dieses Bauprinzip ist von dem Anmelder der vorliegenden Erfindung erstmals in DE 43 07 596 A1 vorgeschlagen worden.

Der Schalter sollte ähnlich wie bei herkömmlichen separaten Rückfahrlichtschaltern durch eine flexible Membran gegenüber dem die Schaltwelle abtastenden Organ abgedichtet sein, damit die elektrischen Komponenten des Schalters gegen das im Getriebegehäuse enthaltene Öl geschützt sind. Bei herkömmlichen Schaltern werden zu diesem Zweck verhältnismäßig teure gummielastische Membranen eingesetzt, die mit Teflon® beschichtet sind, um die Diffusion von Öl durch die Membran hindurch zu verhindern.

Damit der Schalter selektiv nur dann betätigt wird, wenn der Rückwärtsgang eingelegt ist, muß das dem Rückwärtsgang zugeordnete Teil des Schaltgebirges in der Tiefe von den Tiefen der übrigen Täler des Schaltgebirges abweichen. Besonders einfach und zweckmäßig ist eine Anordnung, bei der das dem Rückwärtsgang zugeordnete Tal tiefer ist als die übrigen Täler. Dies gestattet es, den Schalter mit relativ einfachen Mitteln so auszulegen, daß er selektiv nur dann öffnet oder schließt, wenn sich das Rastglied in dem vertieften Tal für den Rückwärtsgang befindet, während der Schalter ständig unbetätigt bliebt, wenn das Rastglied die Berge zwischen benachbarten Tälern des Schaltgebirges überwindet und in eines der den Vorwärtsgängen zugeordneten Täler einfällt. Außerdem kann bei dieser Anordnung erreicht werden, daß das Rückfahrlicht beim Einlegen des Rückwärtsgangs erst im letzten Moment kurz vor Erreichen der Rückwärts-Position eingeschaltet und beim Herausnehmen des Rückwärtsgangs unverzüglich wieder ausgeschaltet wird, sobald das Rastglied die tiefste Position verläßt.

Ein Nachteil besteht bei dieser Anordnung bisher jedoch darin, daß die Membran und das Betätigungsorgan des Schalters relativ weit ausgelenkt werden müssen, während das Rastglied die Berge des Schaltgebirges überwindet. Zwischen den Bergen und Tälern des Schaltgebirges muß ein ausreichender Höhenabstand bestehen, damit eine sichere Fixierung der Schaltwelle gewährleistet wird und dem Fahrer ein hinreichend deutliches Schaltgefühl vermittelt wird. Um in dem Schalter einen ausreichenden Kontaktabstand zu gewährleisten, wären weitaus geringere Schaltwege ausreichend. Die übermäßig langen Schaltwege führen zu einem hohen Verschleiß in dem Schalter und vor allem zu einer raschen Ermüdung der Membran.

Aus DE-U-94 00 632 ist ein Rückfahrlichtschalter mit den im Oberbegriff des Anspruchs 1 angegebenen Merkmalen bekannt. Das Schaltweganpassungsglied dient dort zum Ausgleich von Toleranzen.

Bei Kombinationen aus Rastelement und Schalter gestattet es ein solches Schaltweganpassungsglied, die in dem eigentlichen Schalter auftretenden Schaltwege auf den Wert zu reduzieren, der dem im Ausschaltzustand des Schalters erforderlichen Mindestkontaktabstand entspricht, während das Rastglied, das den Schalter betätigt, wesentlich größere Hübe ausführen kann. Wenn das Rastglied das tiefste Tal des Schaltgebirges, das beispielsweise dem Rückwärtsgang zugeordnet ist, verläßt, so überwindet das Schaltweganpassungsglied die elastische Vorspannung des Betätigungsorgans des Schalters, und der Schalter wird in üblicher Weise betätigt, so daß unverzüglich das Verlassen der Rückwärts-Getriebeposition signalisiert wird. Wenn dann im weiteren Verlauf der Getriebeumschaltung das Rastglied auf die Flanke eines Berges des Schaltgebirges aufläuft, so wird das Betätigungsorgan des Schalters gegen einen Anschlag gedrückt, der den Schaltweg begrenzt. In diesem Augenblick erfährt das elastisch komprimierbare Schaltweganpassungsglied einen größeren Widerstand, so daß es komprimiert wird und den weiteren Hub des Rastglieds ausgleicht. Auf diese Weise wird ein leichtgängiges und blockierungsfreies Umschalten des Getriebes ermöglicht, während bei dem Schalter nur minimale Schaltwege und Membranauslenkungen auftreten. Hierdurch wird insbesondere die Lebensdauer der Membran beträchtlich erhöht.

Ein Problem besteht aber noch darin, daß die unvermeidlichen Maßtoleranzen die Größenordnung des Schaltweges des Schalters erreichen können.

Aufgabe der Erfindung ist es deshalb, ein Rastelement der eingangs genannten Art zu schaffen, bei dem eine die Maßtoleranzen reduziert werden können.

Diese Aufgabe wird erfindungsgemäß gelöst durch einen Toleranzausgleichsstift, der kraftschlüssig in einer Axialbohrung des Druckstiftes gehalten ist und mit einem aus dem Druckstift herausragenden Kopf über die Membran das Betätigungsorgan des Schalters betätigt und der zum Ausgleich von Maßtoleranzen tiefer in die Axialbohrung zurückdrückbar ist, wenn sich das Betätigungsorgan an einem Anschlag abstützt und das Rastglied einen Berg des Schaltgebirges überfährt und dabei das Schaltweganpassungsglied auf seine minimale Länge komprimiert.

Vorteilhafte Ausgstaltungen der Erfindung ergeben sich aus den Unteransprüchen.

Im folgenden werden bevorzugte Ausführungsbeispiele der Erfindung anhand der Zeichnung näher erläutert.

Es zeigen:
- Fig. 1 bis 3: Längsschnitte durch ein Rastelement mit Schalter in unterschiedlichen Betriebspositionen; und
- Fig. 4 bis 6: eine abgewandelte Ausführungsform eines Schaltweganpassungsgliedes in drei verschiedenen Zuständen.

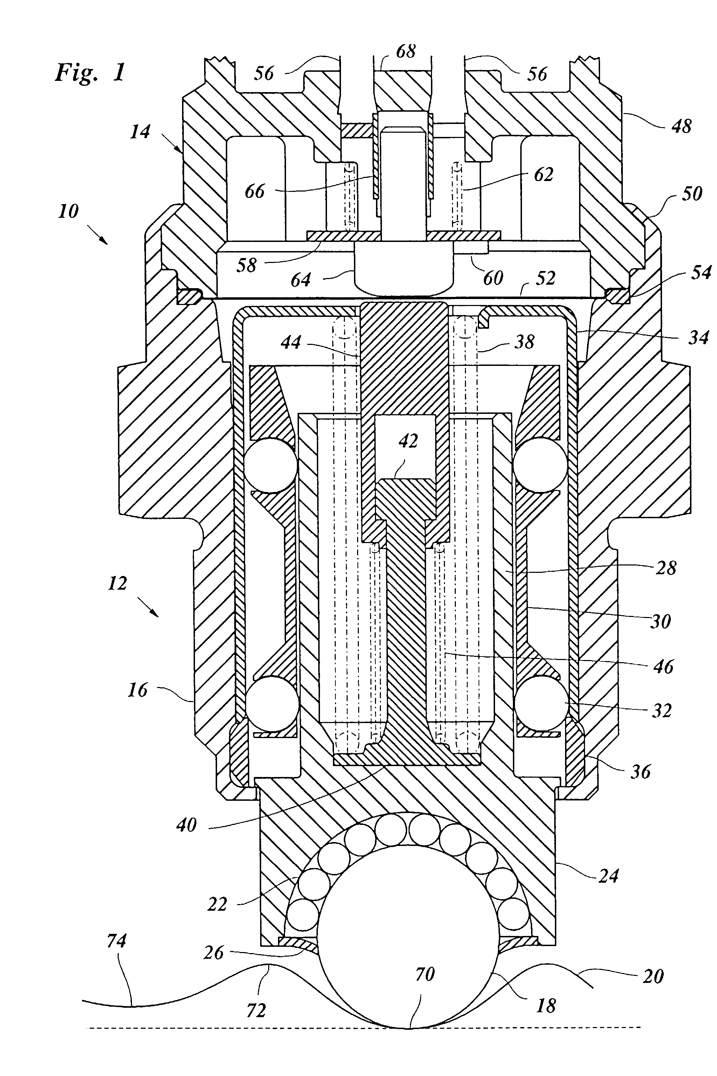

Das in Figur 1 gezeigte Rastelement 10 wird durch eine Arretierschraube 12 gebildet, die mit einem elektrischen Schalter 14, beispielsweise einem Rückfahrlichtschalter kombiniert ist.

Die Arretierschraube 12 besitzt ein mit Gewinde und Schlüsselprofil versehenes, beispielsweise durch eine Hohlschraube gebildetes Gehäuse 16 aus Metall, das in ein nicht gezeigtes Getriebegehäuse einschraubbar ist. Am in das Getriebegehäuse hineinragenden Ende der Arretierschraube ist eine Rastkugel 18 angeordnet, die ein in der Zeichnung in Abwicklung angedeutetes Schaltegebirge 20 einer Schaltwelle abfährt. Die Rastkugel 18 ist mit Hilfe von Stützkugeln 22 reibungsarm in einer Lagerschale 24 gelagert und durch einen Haltering 26 gesichert.

Die Lagerschale 24 bildet das Ende einer zylindrischen Hülse 28, die in einem Kugellager 30 gelagert und innerhalb eines begrenzten Bereichs axial in dem Gehäuse 16 der Arretierschraube 12 beweglich ist. Die äußere Laufbahn für die Kugeln 32 des Kugellagers 30 wird durch einen in das Gehäuse 16 eingepreßten Topf 34 aus tiefgezogenem und gehärtetem Blech gebildet, der an seinem offenen unteren Ende durch einen Konusring 36 gehalten ist und dessen bis auf eine kleinere zentrale Öffnung geschlossenes oberes Ende ein Widerlager für eine Feder 38 bildet. Die Feder 38 verläuft axial innerhalb der Hülse 28 und stützt sich mit ihrem unteren Ende auf einem Haltestift 40 ab, der sich seinerseits an dem durch die Lagerschale 24 abgeschlossenen unteren Ende der Hülse 28 abstützt. Die Rastkugel 18 und die Hülse 28 mit der Lagerschale 24 bilden zusammen ein Rastglied, das durch die Feder 38 elastisch gegen das Schaltegebirge 20 vorgespannt wird.

Der Haltestift 40 ist am oberen Ende mit einem verdickten Kopf 42 teleskopartig in einem Druckstift 44 geführt und ist in seinem mittleren Bereich von einer weiteren Feder 46 umgeben, die sich auf dem tellerartigen unteren Ende des Haltestiftes abstützt und mit ihrem oberen Ende den Boden des Druckstiftes 44 gegen den Kopf 42 andrückt.

Der Haltestift 40, der Druckstift 44 und die Feder 46 bilden zusammen ein elastisch komprimierbares teleskopartiges Schaltweganpassungsglied, das zur Betätigung des Schalters 14 dient.

Der Schalter 14, von dem in der Zeichnung lediglich der die Schaltkontakte aufnehmende Teil gezeigt ist, besitzt ein im wesentlichen zylindrisches Gehäuse 48 aus Kunststoff, das mit seinem unteren Ende in das obere Ende des Gehäuses 16 der Arretierschraube 12 eingesetzt und beispielsweise durch einen Bördelrand 50 fest mit der Arretierschraube verbunden ist. Zwischen den Gehäusen 16 und 48 der Arretierschraube 12 und des Schalters 14 sind eine durch ein dünnes Stahlplättchen gebildete Membran 52 und ein Dichtring 54 eingespannt. Durch die Membran 52 wird das Innere des Schaltergehäuses gegenüber der Arretierschraube abgeschlossen, so daß die elektrischen Komponenten des Schalters gegen das Eindringen von Öl geschützt sind.

In dem Gehäuse 48 des Schalters 14 sind zwei Kontaktstifte 56 angeordnet. Diese Kontaktstifte 56 sind innerhalb des Gehäuses 14 in Abstand um eine ringförmige Kontaktbrücke 58 herumgeführt und bilden zwei Kontakte 60, die an der Unterseite der Kontaktbrücke 58 liegen. In der Zeichnung ist nur der Kontakt 60 des rechten Kontaktstiftes 56 zu erkennen, da der linke Kontaktstift teilweise im Schnitt gezeigt ist, so daß sein Kontakt auf der dem Betrachter zugewandten Seite der Zeichenebene liegt.

Die Kontaktbrücke 58 ist durch eine Feder 62 elastisch in Richtung auf die Membran 52 vorgespannt und stützt sich an einem Kopf eines Betätigungsorgans 64 ab, das in einer Hülse 66 axial verschiebbar in dem Gehäuse 14 geführt ist und der Stirnseite des Druckstiftes 44 auf der anderen Seite der Membran 52 gegenüberliegt. Der Bewegungsbereich des Betätigungsorgans 64 wird nach oben durch eine Trennwand 68 des Gehäuses begrenzt, die einen Anschlag für den in der Hülse 66 geführten Schaft des Betätigungsorgans bildet.

Figur 1 zeigt den als Öffner ausgebildeten Schalter 14 im unbetätigten Zustand. Die Kontaktbrücke 58 liegt an den Kontakten 60 an, und der Kopf des Betätigungsorgans 64 liegt an oder in geringem Abstand zu der nicht ausgelenkten Membran 52.

Zwar befindet sich der Druckstift 44 in bezug auf den Haltestift 40 in seiner oberen Endlage, doch kann er die Membran 54 nur gerade eben erreichen, da sich die Hülse 28 und die Rastkugel 18 in ihrer unteren Endlage befinden. Die Rastkugel 18 liegt in diesem Fall in einem besonders tiefen Tal 70 des Schaltgebirges. Dieses Tal entspricht beispielsweise dem Rückwärtsgang. Da der Schalter 14 in diesem Zustand geschlossen ist, ist das Rückfahrlicht des Fahrzeugs eingeschaltet.

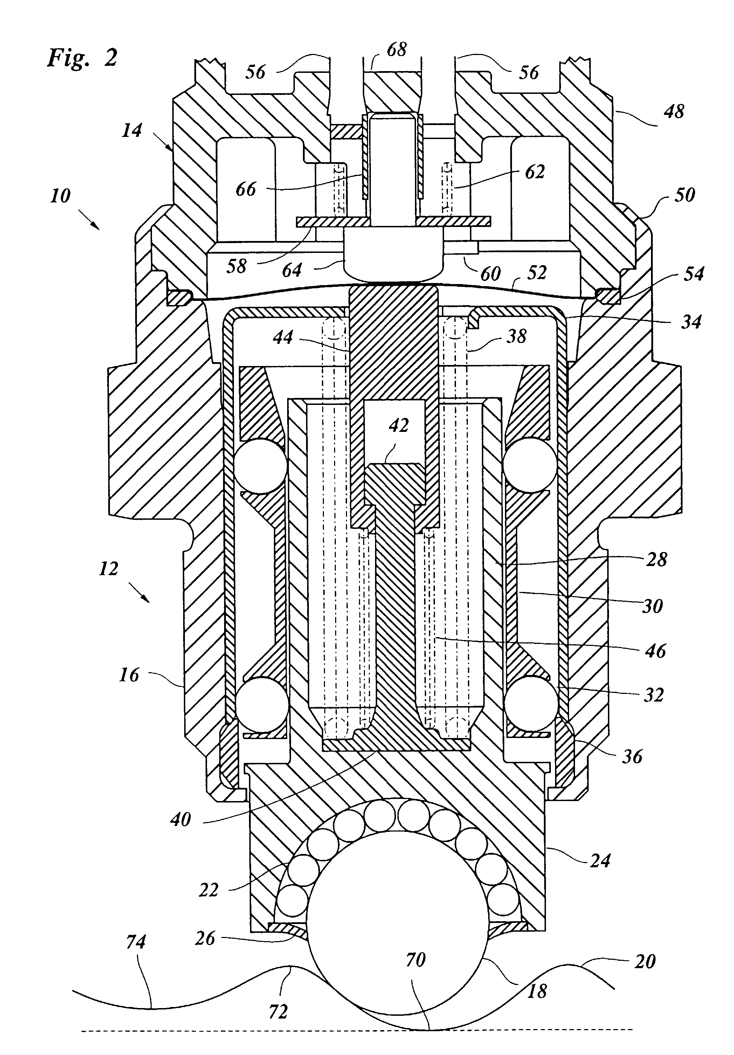

Wenn die Getriebeposition geändert wird, verläßt die Rastkugel 18 das Tal 70, und sie läuft auf einen Berg 72 des Schaltgebirges 20 auf. Bereits in der Anfangsphase dieser Bewegung wird der Schalter 14 geöffnet, wie in Figur 2 gezeigt ist.

Die Rastkugel 18, die Lagerschale 24 und die Hülse 28 bewegen sich etwas nach oben und nehmen dabei auch den Haltestift 40 mit. Da die Feder 46, die den Druckstift 44 nach oben vorspannt, stärker ist als die Summe aus der Kraft der Feder 62 in dem Schalter 14 und der Rückstellkraft der Membran 52, bewegt sich auch der Druckstift 44 nach oben, so daß das Betätigungsorgan 64 von den Kontakten 60 abgehoben und somit der Kontakt unterbrochen wird.

Der Schaltweg des Betätigungsorgans 64 und die Auslenkung der Membran 52 sind in Figur 2 etwas übertrieben dargestellt und brauchen in der Praxis nur etwa 0,5 mm zu betragen. Auf diese Weise wird eine hohe Ansprechempfindlichkeit des Rückfahrlichtschalters auf die Position der das Schaltgebirge 20 tragenden Schaltwelle erreicht.

Das Betätigungsorgan 64 hat in Figur 2 seine obere Endlage erreicht, in der es sich an der Zwischenwand 68 des Gehäuses 48 abstützt.

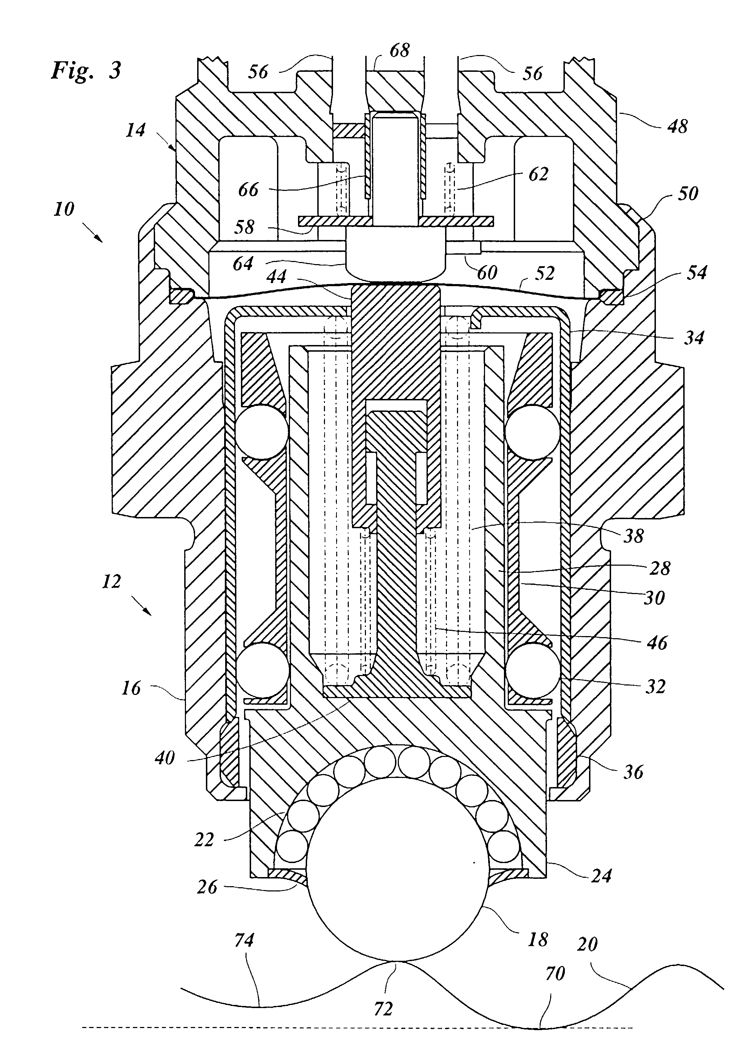

Im weiteren Verlauf der Getriebeumschaltung muß sich die Rastkugel 18 zunächst weiter nach oben bewegen und den Berg 72 des Schaltegebirges überwinden, bevor sie in das nächste, einem der Vorwärtsgänge entsprechende Tal 74 einfallen kann. Da das Betätigungsorgan 64 des Schalters 14 bereits am Anschlag ist, kann die Membran 52 nicht weiter ausgelenkt werden, und der Druckstift 44 kann sich nicht weiter nach oben bewegen. Die Weiterbewegung der Rastkugel 18 wird jetzt dadurch ermöglicht, daß der Haltestift 40 unter Kompression der Feder 46 in den Druckstift 44 einfährt. Auf diese Weise kann die Rastkugel 18 den Konturen des Schaltgebirges 20 folgen und dabei Hübe zurücklegen, die wesentlich größer sind als der Schaltweg des Schalters 14 und die Auslenkung der Membran 52. Figur 3 zeigt als Beispiel den Zustand, an dem die Rastkugel 70 den Scheitel des Berges 72 erreicht hat.

Die Feder 46 setzt der Aufwärtsbewegung der Rastkugel 18 einen etwas größeren Widerstand entgegen als die Feder 62 beim Verlassen der Rückwärtsgang-Position. Dieser Unterschied ist für den Benutzer jedoch praktisch nicht spürbar, da bei dem insgesamt zum Anheben der Rastkugel zu überwindenden Widerstand der Anteil der Feder 38 bei weitem überwiegt.

Wie in der Zeichnung zu erkennen ist, haben die Täler 74 des Schaltgebirges 20, die den Vorwärtsgängen oder der Leerlaufposition entsprechen, eine geringere Tiefe als das Tal 70. Der Höhenunterschied entspricht mindestens dem Schaltweg des Schalters 14, so daß der Schalter nur bei eingelegtem Rückwärtsgang geschlossen wird. Wenn sich die Rastkugel am Grund des Tals 74 befindet, entspricht der Zustand der Arretierschraube 12 und des Schalters 14 etwa dem in Figur 2 gezeigten Zustand.

Das oben beschriebene Ausführungsbeispiel kann auf vielfältige Weise abgewandelt werden.

Beispielsweise kann der Schalter 14 auch als Schließer ausgebildet sein. Es kann auch ein Schalter eingesetzt werden, der zwischen zwei Schaltstellungen umschaltbar ist, oder ein Taster, der eine gewisse Schalthysterese aufweist.

Das Schaltweganpassungsglied kann wahlweise auch so ausgebildet sein, daß der Druckstift 44 in den Haltestift 42 eintaucht. Außerdem kann die Feder 46 auch in das Innere des Haltestiftes verlegt werden, so daß sie sich zwischen dem Kopf 42 und der Decke der in dem Haltestift ausgebildeten Kammer abstützt.

Ein gewisses Problem kann sich bei Rastelementen mit integriertem Schalter daraus ergeben, daß zwischen dem Schaltorgan 64 des Schalters und dem Schaltgebirge 20 der Schaltwelle insgesamt ein relativ großer Abstand besteht, der durch mehrere Zwischenglieder überbrückt wird. Die bei der Herstellung dieser Zwischenglieder unvermeidlichen Maßtoleranzen können sich deshalb zu einem Wert addieren, der in der Größenordnung des Schaltweges des Schalters liegt, zumal dieser Schaltweg bei der erfindungsgemäßen Lösung äußerst klein ist.

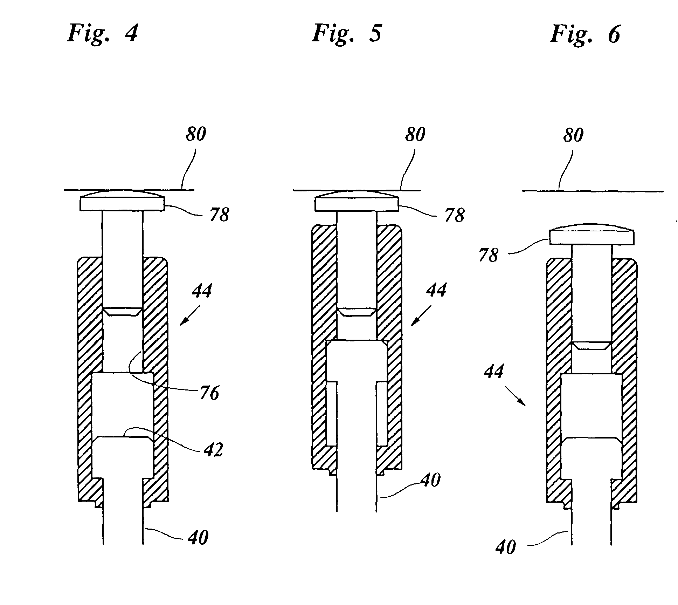

Figuren 4 bis 6 illustrieren eine zweckmäßige Weiterbildung, mit der dieses Problem auf einfache Weise gelöst werden kann.

Bei der Ausführungsform nach Figuren 4 bis 6 ist der Druckstift 44 mit einer Axialbohrung 76 versehen. Ein Ausgleichsstift 78 besitzt einen pilzförmigen Kopf zur Betätigung des Schalters sowie einen verjüngten Schaft 78, der im Preßsitz in der Bohrung 76 gehalten ist.

Bei der Herstellung und Montage wird der Ausgleichsstift 48 nur so weit in die Bohrung 76 eingedrückt, daß er noch relativ weit heraussteht. Nach dem Einlegen der Membran 52 und dem Aufsetzen des Schalters 14 bilden die Membran und das gegen die Zwischenwand 68 des Schaltergehäuses zurückgedrückte Betätigungsorgan 64 des Schalters einen Anschlag, der in Figuren 4 bis 6 durch eine Linie 80 symbolisiert ist.

Wenn nach dem Einschrauben der Arretierschraube 12 in das Getriebegehäuse die Rastkugel 18 erstmals einen Berg 72 des Schaltgebirges überfährt, wird der Druckstift 44 so weit angehoben, daß der Ausgleichsstift 78 den Anschlag 80 erreicht. Zunächst kann dann der Haltestift 40 unter Kompression der Feder 46 weiter in den Druckstift 44 einfahren. Wenn jedoch der Kopf 42 des Haltestiftes seine obere Endlage in bezug auf den Druckstift 44 erreicht hat (Figur 5), muß sich auch der Druckstift 44 weiter nach oben bewegen, so daß sich der Ausgleichsstift 78 tiefer in die Bohrung 76 eindrückt. Der Ausgleichsstift 78 erreicht somit seine endgültige Position in bezug auf den Druckstift 44, wenn die Rastkugel 18 den höchsten Berg des Schaltgebirges überfährt.

Wenn die Rastkugel und der Druckstift 44 sich wieder absenken (Figur 6) wird der Ausgleichsstift 78 kraftschlüssig in der einmal erreichten Position in bezug auf den Druckstift 44 gehalten. Von diesem Augenblick an ist der Ausgleichsstift 78 so positioniert, daß sämtliche Maßtoleranzen der Arretierschraube 16 und des Schalters 14 mit einem Schlage und für alle Zeit ausgeglichen sind.

Die Gesamtlänge sämtlicher Zwischenglieder einschließlich der Rastkugel 18, des Schaltweganpassungsgliedes im vollständig komprimierten Zustand und des Betätigungsorgans 64 des Schalters wird auf diese Weise so eingestellt, daß sie exakt dem Abstand zwischen dem Scheitel des Berges 72 des Schaltgebirges und der Zwischenwand 68 des Schaltergehäuses entspricht, die als Anschlag für das Betätigungsorgan 64 dient. Auf den Schaltpunkt des Schalters können sich deshalb allenfalls noch die vernachlässigbar kleinen Maßtoleranzen auswirken, die die Niveauunterschiede zwischen den Bergen und Tälern des Schaltgebirges sowie die entsprechende Ausfahrlänge des Druckstiftes 44 relativ zu dem Haltestift 40 bestimmen. Da diese Länge nur wenige Millimeter beträgt, ist selbst bei einer Maßtoleranz in der Größenordnung von 1% sichergestellt, daß die verbleibenden Maßabweichungen deutlich kleiner sind als der Schaltweg von etwa 0,5 mm. Auf diese Weise läßt sich eine präzise Einstellung des Schaltpunktes und eine einwandfreie Funktion des Schalters gewährleisten.

Abweichend von dem beschriebenen Ausführungsbeispiel kann der Ausgleichsstift 78 wahlweise auch in dem Betätigungsorgan 64 des Schalters angeordnet sein.

## Patentansprüche

1. Rastelement für Schaltwellen, mit einem elastisch gegen ein Schaltgebirge (20) der Schaltwelle gespannten Rastglied (18, 24, 28), einem durch eine Membran (52) von dem Rastglied getrennten Schalter (14), dessen Betätigungsorgan (64) elastisch in Richtung auf das Rastglied vorgespannt und durch dieses betätigbar ist, und einem zwischen dem Rastglied (18, 24, 28) und der Membran (52) eingefügten, elastisch komprimierbaren Schaltweganpassungsglied (42, 44, 46), das einen Haltestift (40) und einen Druckstift (44) aufweist, die teleskopartig gegeneinander verschiebbar und durch eine Feder (46) in Trennrichtung vorgespannt sind, **gekennzeichnet** durch einen Toleranzausgleichsstift (78), der kraftschlüssig in einer Axialbohrung (76) des Druckstiftes (44) gehalten ist und mit einem aus dem Druckstift (44) herausragenden Kopf über die Membran (52) das Betätigungsorgan (64) des Schalters betätigt und der zum Ausgleich von Maßtoleranzen tiefer in die Axialbohrung (76) zurückdrückbar ist, wenn sich das Betätigungsorgan (64) an einem Anschlag (68) abstützt und das Rastglied (18, 24, 28) einen Berg (72) des Schaltgebirges (20) überfährt und dabei das Schaltweganpassungsglied auf seine minimale Länge komprimiert.

2. Rastelement nach Anspruch 1, dadurch **gekennzeichnet,** daß der Ausfahrweg des Druckstiftes (44) relativ zu dem Haltestift (40) durch einen Anschlag derart begrenzt ist, daß das Schaltweganpassungsglied den Zwischenraum zwischen dem Rastglied (18, 24, 28) und der Membran (52) überbrückt ohne die Membran auszulenken, wenn das Rastglied seine am weitesten in Richtung auf das Schaltgebirge (20) vorspringende Position einnimmt.

3. Rastelement nach einem der vorstehenden Ansprüche, dadurch **gekennzeichnet,** daß die Membran (52) eine Stahlmembran ist.

## Claims

1. Detent for gear-shift shafts, with a detent member (18, 24, 28) which is tensioned resiliently against a set of bumps (20) of the gear-shift shaft, with a switch (14) which is separated from the detent member by a diaphragm (52), the actuating device (64) of the said switch being resiliently pretensioned in the direction of the detent member and capable of being actuated by the latter, and with a resiliently compressible shift distance adapting member (42, 44, 46) which is inserted between the detent member (18, 24, 28) and the diaphragm (52) and has a retaining pin (40) and a pressure pin (44) which are movable telescopically towards one another and are pretensioned by a spring (46) in the direction of separation, characterised by a tolerance compensating pin (78) which is held in a force-locking manner in an axial bore (76) of the pressure pin (44), and which with a head projecting out of the pressure pin (44) actuates the actuating device (64) of the switch by way of the diaphragm (52) and in order to compensate for dimensional tolerances can be pushed back deeper into the axial bore (76) when the actuating device (64) rests on a stop (68) and the detent member (18, 24, 28) travels over a bump (72) of the set of bumps (20) and thus compresses the shift distance adapting member to its minimum length.

2. Detent as claimed in Claim 1, characterised in that the outward travel distance of the pressure pin (44) relative to the retaining pin (40) is limited by a stop such that the shift distance adapting member bridges the space between the detent member (18, 24, 28) and the diaphragm (52) without deflecting the diaphragm when the detent member takes up its position in which it projects furthest in the direction of the set of bumps (20).

3. Detent as claimed in one of the preceding claims, characterised in that the diaphragm (52) is a steel diaphragm.

## Revendications

1. Élément d'arrêt pour arbres de changement de vitesses, comprenant un organe d'arrêt (18, 24, 28) plaqué élastiquement contre un relief de commutation (20) de l'arbre de changement de vitesses, un commutateur (14) qui est séparé de l'organe d'arrêt par une membrane (52) et dont l'organe d'actionnement (64) est précontraint élastiquement en direction de l'organe d'arrêt et peut être actionné par celui-ci, et un organe élastiquement compressible d'adaptation à la course de changement de vitesses (42, 44, 46) qui est inséré entre l'organe d'arrêt (18, 24, 28) et la membrane (52) et qui comporte une tige de maintien (40) et une tige de pression (44) qui peuvent coulisser l'une par rapport à l'autre de manière télescopique et sont précontraintes dans la direction de séparation par un ressort (46), caractérisé par une tige de compensation de tolérances (78) qui est maintenue par conjugaison de forces dans un trou axial (76) de la tige de pression (44) et qui, à l'aide d'une tête sortant de la tige de pression (44), actionne l'organe d'actionnement (64) du commutateur à travers la membrane (52) et peut être repoussée plus loin dans le trou axial (76) pour compenser des tolérances dimensionnelles lorsque l'organe d'actionnement (64) prend appui contre une butée (68) et que l'organe d'arrêt (18, 24, 28) franchit un sommet (72) du relief de commutation (20) et comprime ainsi l'organe d'adaptation à la course de changement de vitesses à sa longueur minimale.

2. Élément d'arrêt selon la revendication 1, caractérisé en ce que la course de sortie de la tige de pression (44) par rapport à la tige de maintien (40) est limitée par une butée, de façon que l'organe d'adaptation à la course de changement de vitesses comble l'intervalle entre l'organe d'arrêt (18, 24, 28) et la membrane (52) sans dévier la membrane lorsque l'organe d'arrêt adopte sa position la plus débordante en direction du relief de commutation (20).

3. Élément d'arrêt selon une des revendications précédentes, caractérisé en ce que la membrane (52) est une membrane en acier.
